# EUROPEAN PATENT APPLICATION

(11) **EP 4 714 596 A1**
(43) Date of publication of application: **25.03.2026**
(21) Application number: 24000116.4
(22) Date of filing: 19.09.2024
(51) Int. Cl.: B25B 11/00, B60J 1/00, B62D 65/06

(54) **LIFTING DEVICE WITH SUCTION ELEMENTS FOR REPLACING AND PLACING CAR WINDSHIELDS**

(71) Applicant: DB Imagineering BV., 5061 JR Oisterwijk (NL)
(72) Inventor: SCHELLEKENS, Johannes Wilhelmus Maria, 5061 JR Oisterwijk (NL)

(57) **Abstract**

The invention relates to a further developed lifting device (1) with suction elements (12, 13) for replacing and placing average car windshields (2) after they have been repaired in a very efficient and ergonomical way for mechanics (3).

## Description

### Field of the invention.

The present invention relates to a lifting device for lifting and turning over loosened car windshields for repair activities. The lifted or demounted and turned over car windshields have to be placed on a support structure (not shown) for further repairing and cleaning activities. Afterwards mentioned windshield or a new windshield has to be placed in the windshield car frame.

### State of the art.

In our European Patent Application EP19075005.9/3708315, filed 15-03-2019, is described the loosening of the windshield from its front car frame. Title of EP3708315 is "Car Windshield Removal Apparatus and Method"; applicant and inventor is Johannes, Wilhelmus, Maria Schellekens, Carpe Diem B.V., Oisterwijk, The Netherlands.

Furthermore, suction elements for lifting activities of glazing panels are known from the Unites States Patents US 9,079,715 B2; filed 20-05-2013; titled: "Lifting Device with Sucker Mount Arrangement and Upwardly Curved Handle"; applicant: Belron Hungary Kft-Zug Branch (CH), inventor; William Finck Brentwood (UK).

This invention describes a lifting device with an elongated arm bar with a handle portion and with two at a distance rotary fixed suction elements at a mutual short distance. The spacing between the first and second lifting device is narrow and the form of said handle is constructed in such a way that the flat glazing plate cannot be turned over or rotate along its length axle of the glazing. This invention is only intended to move the flat glazing panel.

In practice, the car windshields are not flat and have a curved surface at the sides. So, this invention is not usable for repairing car windshields and have to be turned over axle A.

Then, a further drawback of this application US 9,079,715 for repairing car windshield is that the arms of the mechanics have to be stretched out completely, which applies great forces on his arms. This leads to muscle damages.

Another problem is, that the suction elements for lifting activities of glazing panels is not adjustable in an axial sense. Motor cars with longer hoods cannot use these suction elements. Furthermore, you always need two mechanics in order to remove the loosened windshield also if the glazing is flat.

### Object of the invention.

The aim of our invention is to overcome the mentioned drawbacks of the US 9,079,715 patent as described. So, mechanics need to be provided with a lifting device which is very suitable for removing and replacing car windshields in a way the load is minimal for a mechanic. Also, said lifting device has to operate very efficiently and must be manufactured at relatively low costs.

### Summary of the invention.

The lifting device according to the invention with suction elements for replacing and placing car windshields in or out of front car frames is characterized in that one suction element of the lifting device is rotary fixed at one end of said elongated bar and that the second suction element is slidable rotary fixed at a distance X, wherein the other end of said elongated bar is shaped as a crank with handle grip, with a mutual distance Z to said bar, wherein at both upstanding sides of said car windshield two adjustable lifting devices are placed at a distance Y, wherein said elongated bar is made of a metal and said suction elements are made of a plastic material with an adjustable connect construction to attach to said car windshield.

The advantage is, that said lifting device is usable for normally curved car windshields of very different measures and shapes by adjusting X and Y. Also, the turning over of the windshield is possible without exerting an extra load on the arms of the mechanics.

Then, the lifting device according to the invention is further characterized in that at one end of the upstanding car windshield two lifting devices are replaced by a U-shaped lifting device with an axial rotation axle fastened at an adjustable cable of the lifting crane.

The advantage is, that only one mechanic is needed to do the job.

Furthermore, the lifting device according to the invention is further developed wherein said elongated bar has a massive or hollow cross section in such a way that the elongated bar is bending stiff in order to handle the car windshield operation.

The advantage is, that a lifting device is created which is easy to handle for repair mechanics.

Then, the lifting device according to the invention is further developed, wherein the mutual distance Z from crank to said elongated bar is between 120 mm and 150 mm, wherein said distance X is variable between 100 mm and 300 mm and that the distance Y is about 125 mm for average car windshields.

The advantages are, that in practice a very usable lifting device is obtained and that the body of the mechanic is not overloaded.

Then, the lifting device according to the invention is further developed in such a way that said metal of the elongated bar with crank is executed in steel, wherein said plastic material is a rubber.

The advantage is, that very usable materials are used for an economic and sustainable construction.

Then, the lifting device according to the invention is further developed in such a way that said second suction element is slidably rotary fixed at a distance X and is fastened with a steel lip with a security pin.

The advantage is an efficient operation for windshield repair operations or activities.

Another overall advantage of the invention is, that the elbow of the mechanic can remain alongside his body. So, the load on the arms of the mechanic is minimal.

### Brief description of the drawing.

A preferred embodiment of the present invention will now be described with reference to the accompanying drawing, in which:
Figure 1 shows a view in oblique projection of a first embodiment of a lifted car windshield with two pairs of lifting devices at both sides of the windshield and where two mechanics are needed;
Figure 2 shows the overturned car windshield of figure 1 for further treatment by laying upside down (not shown) upon a support construction;
Figure 3 shows a view in oblique projection of a second embodiment of a lifter car windshield with one pair of lifting devices at one side and a special lifting crane with an adapted lifting and overturning device;
Figure 4 shows the overturned car windshield of figure 3;
Figures 5A and 5B show the embodiment of the lifting device according to the invention for handling with two mechanics; and
Figure 6 shows in detail in oblique projection the embodiments of the overturned device in U-shape for handling to the special lifting crane used in the figures 3 and 4 according to the invention.

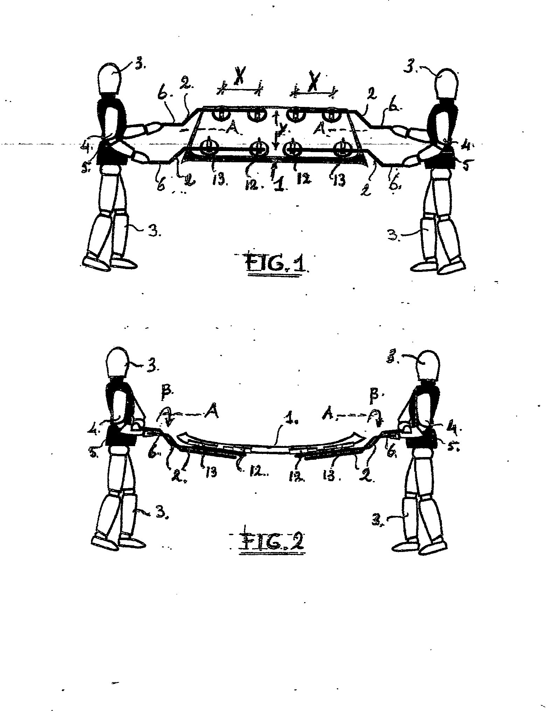

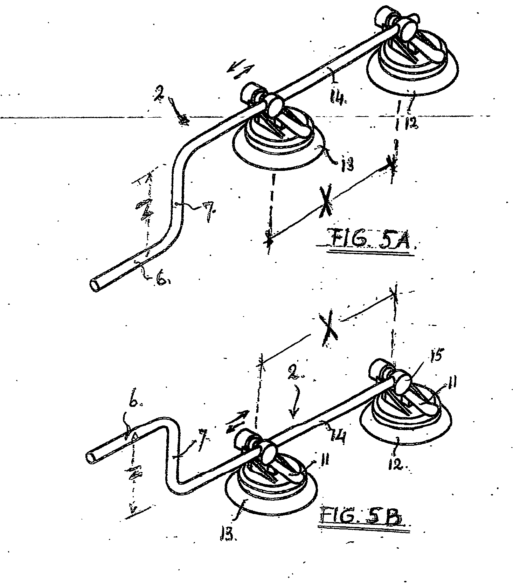

Figure 1 shows the first embodiment in oblique projection of the lifting device 2 and the lifting of the car windshield 1. Two mechanics 3 are needed to lift and turnover the windshield 1 of the car and laying this on a support table (not shown) for further repair activities of said car windshield 1. In this lifted position from the front car frame (not shown) the two mechanics 3 can hold their elbows 4 against the sides 5 of their bodies, which is very important for a minimal load on the arms and bodies of the mechanics 3. This is a great advantage to the body condition of the mechanics 3. Therefore, according to this invention, the shape of the two pair of lifting devices 2 are executed as cranks 7 (see figures 5A and 5B). In lifting position this crank 7 is down and after turning over the windshield 1 the handle grips 6 of the crank 7 are up. This is the only way to do this job properly and it is of a great ergonomic advantage to the body of the mechanics 3. The lifting devices are described in the figures 5A and 5B in more detail.

Furthermore, the distance Y between said lifting devices 2 is approximately the body width of the mechanic 3. The length X is adjustable depending on the windshields.

Figure 2 shows the overturned windshield over an angle β of 180 degrees of the car windshield 1 over an axis A, wherein the elbows 4 of the mechanics 3 can stay alongside their bodies 5. This is of a great ergonomic advantage because of the load on the bodies of the mechanics 3 when handling the car windshield 1. This is of great advantage to the mechanic 3, which cannot be achieved with curved lifting arms as claimed in USA Patent US9,079,715B2.

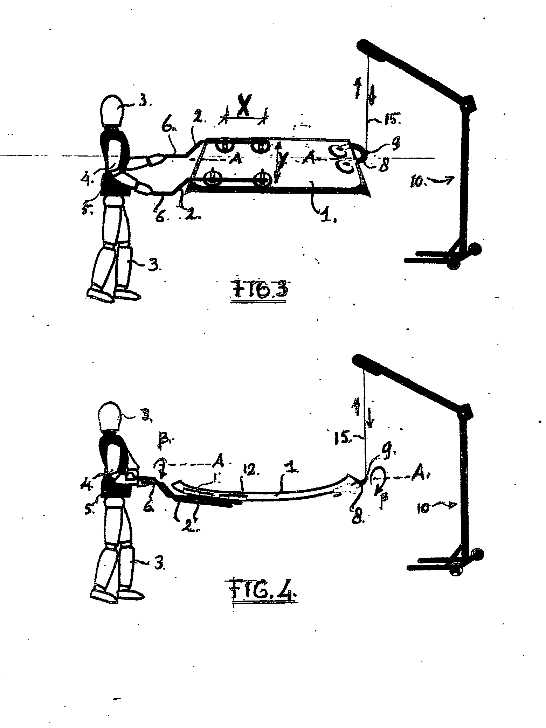

Figure 3 shows a view in oblique projection of a second embodiment of a lifted car windshield 1 with one pair of lifting devices 2, according to the invention, at the left side and a specially developed U-shaped lifting device 8 with a rotary axle 9 to attach to an adapted lifting crane 10 on the right side. The great advantage is, that only one mechanic 3 is needed, who also activates the lifting crane 10 with a remote control (not shown).

Figure 4 shows the complete overturning of the car windshield 1 and placing it on the support table (not shown) for further activities. Same parts have the same numbers.

Figures 5A and 5B show the embodiment of the lifting device 2, according to the invention, in oblique projection. The lifting device 2 has a central bar 14 executed as a crank 7 with a handle grip 6.

The central bar is secured with a click system 11, part of the suction cups 12, 13 to secure on the car windshield 1. The suction cup 12 is mountable fixed on the end of said central bar 14 and the suction cup 13 is movable along said central bar 14 (see distance X).

Suction cup 13 is mounted movably adjustable over said central bar 14 over a distance X. Suction cups 13, 14 are identical. In US9,079,715B2, titled: "Lifting Device with Sucker Mount Arrangement and Upwardly Curved Handle", distance X is not adjustable in said patent.

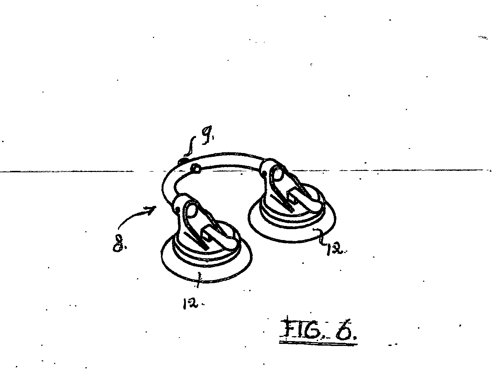

Figure 6 shows the embodiment of the U-shaped lifting device 8 as indicated in the figures 3 and 4. The lifting device 8 rotates around axis 9, which is rotary connected with cable 15 of the lifting crane 10.

However, it is obvious that modifications and/or additions can be made, but they shall remain within the scope and field of this invention.

## Claims

1. Lifting device with suction elements for replacing and placing the car windshield in or out of the front frames of the car for repair activities, wherein said lifting device has an elongated bar with two suction elements at one end and at the other end a handle element, **characterized in that** of one suction element (12) the lifting device is rotary fixed at one end of said elongated bar (14) and that the second suction elements (13) is slidable rotary fixed at a distance X, wherein the other end of said elongated bar (14) is shaped as a crank (7) with handle grip (6), with mutual distance Z to said bar (14), wherein at both upstanding sides of said car windshield (1) two adjustable lifting devices (2) are placed at a distance Y, wherein said elongated bar (14, 6, 7) is made of a metal and said suction elements (12, 13) are made of a plastic material with an adjustable connect construction (16) to attach to said car windshield (1).

2. Lifting device as in claim 1, **wherein** at one end of the upstanding car windshield (1) two lifting devices (2) are replaced by a U-shaped lifting device (8) with an axial rotation axle (9) secured at an adjustable cable (15) of the lifting crane (10).

3. Lifting device as in claim 1, **wherein** said elongated bar (14, 6, 7) has a massive or hollow cross section in such a way, that said elongated bar (14, 6, 7) is bending stiff in order to handle the car windshield (1) operation.

4. Lifting device as in claim 1, **wherein** the mutual distance Z from crank (6, 7) to said elongated bar (14) is between 120 mm and 150 mm.

5. Lifting device as in claim 1, **wherein** said distance X is variable between 100 mm and 300 mm and the distance Y is about 125 mm for average windshields (1).

6. Lifting device as in claim 1, **wherein** said metal of the elongated bar (14) with crank (6, 7) is executed in steel.

7. Lifting device as in claim 1, **wherein** said plastic material is a rubber.

8. Lifting device as in claim 1, **wherein** said second suction element (13) is slidable rotary fixed at a distance X and secured with a steel lip (11) with a security pin (15).
